## Europäisches Patentamt

## European Patent Office

## Office européen des brevets

(19)

(11) Veröffentlichungsnummer: **0 107 005**
**A1**

(12) **EUROPÄISCHE PATENTANMELDUNG**

(21) Anmeldenummer: **83109011.3**

(22) Anmeldetag: **13.09.83**

(51) Int. Cl.³: **A 01 B 23/02**

(30) Priorität: **28.09.82 US 425778**

(43) Veröffentlichungstag der Anmeldung: **02.05.84**
**Patentblatt 84/18**

(84) Benannte Vertragsstaaten: **AT DE FR GB**

(71) Anmelder: **DEERE & COMPANY, 1 John Deere Road, Moline Illinois 61265 (US)**

(72) Erfinder: **Meinert, Harry Mathais, 8420 NW Country Club Dr., Urbandale, IA 50322 (US)**
Erfinder: **Sundberg, John David, 104 South Walnut, Madrid Iowa 50156 (US)**

(74) Vertreter: **Sartorius, Peter et al, DEERE & COMPANY European Office, Patent Department Postfach 503 Steubenstrasse 36-42, D-6800 Mannheim 1 (DE)**

(54) **Halterung zur Befestigung eines Arbeitswerkzeuges, insbesondere zur Befestigung eines Arbeitswerkzeuges eines Bodenbearbeitungsgerätes.**

(57) Eine Halterung (52) zur Befestigung einer Zinke (32) eines Bodenbearbeitungswerkzeuges ist an einen rechteckförmigen Kastenträger (22) mittels eines Befestigungsbolzens (40) lösbar angeschlossen. Die Halterung (52) besteht aus zwei rechteckförmig zueinander verlaufenden Schenkeln (54, 56). Der eine Schenkel (54) weist ein in etwa V-förmiges Formteil bzw. Endteil (58) auf. Das Endteil (58) besteht aus einem Mittelstück mit zwei nach unten abgewinkelten Seitenteilen (62), die allmählich in den flachen Teil des Schenkels (54) übergehen und dabei dem einen Eckteil des Trägers (22) angepaßt sind, damit nach Anziehen des Befestigungsbolzens (40) die Halterung ratterfrei auf den Träger aufbringbar bzw. festklemmbar ist.

EP 0 107 005 A1

<u>Halterung zur Befestigung eines Arbeitswerkzeuges, insbesondere zur Befestigung eines Arbeitswerkzeuges eines Bodenbe-
arbeitungsgerätes</u>

Die Erfindung bezieht sich auf eine Halterung zur Befestigung eines Arbeitswerkzeuges, insbesondere zur Befestigung
eines Arbeitswerkzeuges eines Bodenbearbeitungsgerätes,
wobei die Halterung aus zwei in etwa rechteckförmig zueinander verlaufenden Schenkeln besteht, die gegen die Oberfläche eines aus zumindest zwei Seitenteilen gebildeten
Trägers zur Anlage bringbar und mit je einer Durchdringung
versehen sind, wobei die eine Durchdringung zur Aufnahme
eines Steges des Arbeitswerkzeuges und die andere Durchdringung zur Aufnahme eines Befestigungsbolzens dient, der
die Halterung gegen die Oberflächen des Trägers drückt.

Es ist eine Halterung zur Befestigung eines Bodenbearbeitungswerkzeuges mit einer Scharspitze allgemein bekannt,
wobei die Halterung aus zwei rechteckförmig zueinander verlaufenden Schenkeln gebildet ist, die gegen die Rückseite
und die Oberseite eines kastenförmigen Trägers anliegt. Das
Arbeitswerkzeug weist einen horizontal verlaufenden Steg
auf, der gegen die Unterseite des Trägers anliegt und mittels eines Schraubenbolzens befestigt werden kann, der sich
**hierzu** durch eine Bohrung des horizontal verlaufenden Schenkels erstreckt. Durch Anziehen einer auf den Schraubenbolzen
aufschraubbaren Mutter drücken sich die beiden Schenkel gegen die Oberfläche des Trägers sowie gegen ein Eckteil, das
durch die Rückseite und die Oberseite des Trägers gebildet
ist. Durch eine derartige Befestigung des Bodenbearbeitungswerkzeuges bzw. der Zinke an dem Träger besteht die Gefahr,
nach geringfügigem Lösen der Mutter, daß die Zinke bzw. die
Halterung gegenüber dem Träger eine ratternde Bewegung ausführt und durch weiteres Rattern ein vollständiges Lösen
des Schraubenbolzens herbeigeführt wird, so daß die Zinke
nicht mehr ihre gewünschte Arbeitslage beibehält. Ferner besteht durch übermäßiges Anziehen des Schraubenbolzens bzw. der zugehörigen Mutter die Gefahr, daß ein Abknicken bzw. Verbiegen des oberen Schenkels erfolgt, so daß die Oberfläche des Schenkels nicht plan gegen die Oberseite des Trägers aufliegt.

Demgegenüber liegt der Erfindung die Aufgabe zugrunde, die Halterung zur Befestigung eines Arbeitswerkzeuges derart auszubilden und anzuordnen, daß auch bei übermäßigem Anziehen eines Schraubenbolzens zur Befestigung der Halterung keine bleibende Verformung an der Halterung auftritt und daß nach längerem Arbeitseinsatz des Arbeitswerkzeuges keine selbsttätige Lösung des Schraubenbolzens erfolgen kann.

Diese Aufgabe wird dadurch gelöst, daß der eine Schenkel zur Aufnahme des Befestigungsbolzens mit einem Formstück bzw. Steg versehen ist, der eine in Richtung des Steges des Arbeitswerkzeuges zeigende Vertiefung aufweist, wobei der Steg über einen zumindest teilweise gekrümmten Teil an den Schenkel angeschlossen ist, der gegen einen Eckteil des aus zumindest zwei Seitenteilen gebildeten Trägers anlegbar ist und diesen teilweise umgibt. Durch die vorteilhafte Ausbildung und Anordnung der Halterung mit dem zugehörigen Formstück, das über den gekrümmten Teil allmählich in den einen Schenkel der Halterung übergeht, erhält man ein relativ widerstandsfähiges Teil zur Aufnahme des Schraubenbolzens, das auch bei übermäßigem Anziehen des Schraubenbolzens keiner bleibenden Verformung unterliegt, so daß stets eine einwandfreie Sicherung des Bodenbearbeitungswerkzeuges an dem Träger gewährleistet ist. Ferner wird durch den gekrümmten Teil ermöglicht, daß die Halterung von oben her auf den Träger aufgeklemmt wird, so daß keine Bewegung der Halterung gegenüber dem Träger möglich ist, auch dann nicht, wenn sich der Schraubenbolzen ein wenig gelöst hat. Da durch die vorteilhafte Ausbildung des Formstückes keine bleibende Verformung des Formstückes auftritt, dienen die durch Anziehen des Schraubenbolzens hervorgerufenen Biegekräfte zur Selbstsicherung der Mutter bzw. des Schraubenbolzens. Hierdurch wird eine ratterfreie Verbindung der Halterung mit dem Träger ermöglicht.

In weiterer Ausgestaltung der Erfindung ist es vorteilhaft, daß der als Endteil ausgebildete Steg des einen Schenkels eine in Richtung des Eckteiles bzw. in Richtung der Längsachse des Befestigungsbolzens zeigende, in etwa V-förmige Einbuchtung bzw. Vertiefung aufweist. Ein derartig ausgebildetes Formstück läßt sich relativ leicht herstellen und ermöglicht außerdem die Ausbildung des gekrümmten Teils zwischen dem Endteil und dem einen horizontal verlaufenden Schenkel der Halterung. Hierzu ist es gemäß der Erfindung vorteilhaft, daß die gegen den Träger anliegende Kontaktfläche des ersten Schenkels flach verläuft und das Endteil in etwa die gleiche Breite wie der erste Schenkel aufweist. Vorteilhaft ist es ferner, daß das Endteil gebogene Seitenteile aufweist, die gegen das Eckteil des Trägers zur Anlage bringbar sind.

In weiterer Ausgestaltung der Erfindung ist es vorteilhaft, daß der Träger einen in etwa rechteckförmigen Querschnitt aufweist, gegen dessen oberes Eckteil das bogenförmig verlaufende Endteil anpreßbar ist. Durch Anpressen der Halterung gegen die Oberfläche des Trägers erhält man auch bei übermäßiger Belastung des Arbeitswerkzeuges einen einwandfreien Sitz der Halterung auf dem Träger.

Vorteilhaft ist es außerdem, daß der eine Schenkel mit dem Endteil gegen die Oberseite des Trägers und der Steg gegen die Unterseite des Trägers anliegt, während der rechteckförmig zum ersten Schenkel verlaufende Schenkel gegen die vertikal verlaufende Rückseite des Trägers anliegt und das Eckteil gegenüber der Rückseite vorgesehen ist. Hierzu ist es vorteilhaft, daß das Endteil aus einem als Verlängerung des Schenkels ausgebildeten Mittelstück mit zwei nach unten abgebogenen Seitenteilen besteht, die allmählich in den horizontal verlaufenden Teil des Schenkels übergehen und an den Eckteil des Trägers angepaßt sind, und daß der Winkel zwischen den Schenkeln 90° oder etwas kleiner als 90° ist. Ist der Winkel zwischen den beiden Schenkeln etwas kleiner als 90°, so werden durch Anziehen des Schraubenbolzens die beiden Schenkel etwas auseinandergedrückt und dabei in ihre Endlagestellung plan gegen die Oberfläche des Trägers gepreßt, so daß eine ratterfreie Verbindung zwischen der Halterung und dem Träger geschaffen werden kann.

In der Zeichnung ist ein Ausführungsbeispiel einer Zinkenecke nach der Erfindung schematisch dargestellt. Es zeigt:

Fig. 1    eine perspektivische Darstellung einer bekannten Befestigungsvorrichtung für eine Zinke,

Fig. 2    die erfindungsgemäße Befestigungsvorrichtung für eine Zinke,

Fig. 3    eine Seitenansicht der Zinke mit der zugehörigen Befestigungsvorrichtung gemäß Fig. 2,

Fig. 4    eine Vorderansicht der Befestigungsvorrichtung gemäß Fig. 3.

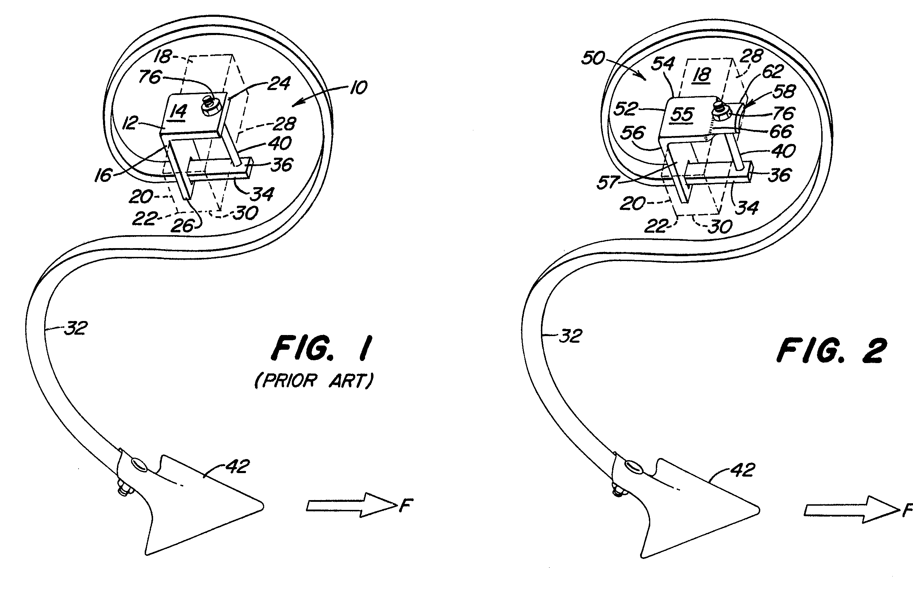

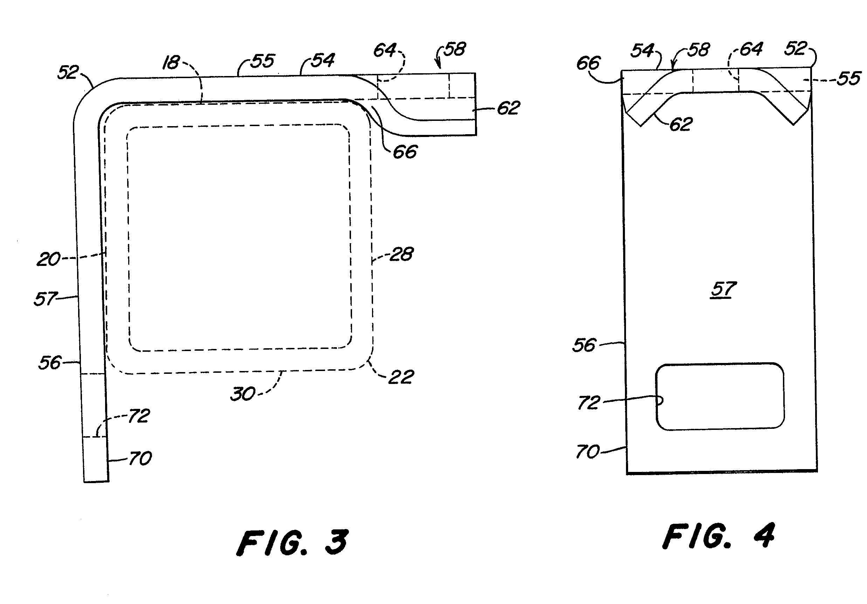

In der Zeichnung ist in Fig. 2 mit 32 eine S-förmige Zinke bezeichnet, die an einem Träger 22 mittels einer Befestigungsvorrichtung an einer mit 50 bezeichneten Stelle angeschlossen ist. Die hierzu notwendige Halterung 52 der Befestigungsvorrichtung besteht aus einem ersten und zweiten Schenkel 54 und 56 mit flach ausgebildeten Flanschteilen 55 und 57, die auf der Oberseite 18 und der Rückseite 20 des Trägers 22 aufliegen. Der Schenkel 54 der Halterung 52 weist einen Steg bzw. einen hervorstehenden Teil bzw. Endteil 58 auf, der mit nach unten abgewinkelten Seitenteilen 62 ausgerüstet ist, die mit dem Mittelstück des Steges 58 ein in etwa umgekehrt V-förmig ausgebildetes Profil ergeben. Der Steg 58 ist mittig mit einer Bohrung bzw. Schlitzöffnung 64 versehen (siehe Fig. 3 und 4), um einen Befestigungsbolzen 40 aufzunehmen. Die Bohrung bzw. die Schlitzöffnung 64 erstreckt sich in Richtung des Steges 34. Die Seitenteile 62 sind mit dem Flanschteil 55 des Schenkels 54 verbunden. Hierzu gehen die nach unten abgewinkelten Seitenteile 62 allmählich in den Flanschteil 55 über. Die Übergangsstelle zwischen den Seitenteilen 62 und dem Flanschteil 55 ist mit 66 bezeichnet, die an den oberen Eckteil, der durch die Oberseite 18 und eine Frontseite 28 des Trägers 22 gebildet ist, angepaßt ist. Wie aus Fig. 3 hervorgeht, ist die Übergangsstelle bzw. der bogenförmig verlaufende Teil 66 so ausgebildet, daß er in Verbindung mit dem Flanschteil 57 auf den Träger 22 aufgeklemmt werden kann. Hierzu wird der Befestigungsbolzen 40 angezogen und zieht den Steg 58 sowie den Flanschteil 57 nach unten gegen die Oberfläche der Oberseite 18 des Trägers 22.

Der Steg 58 kann beispielsweise in einem Gesenk gefertigt werden und somit die gewünschte Vertiefung bzw. den Querschnitt (siehe Fig. 4) erhalten. Somit kann die Biegefestigkeit des Flachmetalls für die Halterung 52 mit einer bestimmten Breite und Dicke erhöht werden.

Der Schenkel 56 ist mit einer unteren Kante 70 versehen, in deren Bereich eine Durchdringung bzw. Langlochöffnung 72 vorgesehen ist, die zur Aufnahme eines horizontal verlaufenden Steges 34 der Zinke 32 dient. Hierzu verläuft der Steg 34 unterhalb einer Unterseite 30 des Trägers 22. Der Befestigungsbolzen 40 wird in eine entsprechende im Steg 34 bzw. im Bereich seines Endes 36 vorgesehene Bohrung von unten eingeführt und dann durch die Bohrung 64 im Steg 58 geführt. Der Befestigungsbolzen 40 läßt sich mit einer Mutter 76 sichern, die hierzu von oben her auf den Befestigungsbolzen 40 aufgeschraubt wird und dadurch gegen die Oberfläche des Steges 58 zur Anlage bringbar ist.

Durch Anziehen der Mutter 76 wird der geformte Steg 58 mit seinem gekrümmten Formteil 66 fest gegen den oberen Eckteil des Trägers 22 gedrückt, wobei der Steg 34 von unten gegen die Unterseite 30 des Trägers 22 gepreßt wird.

Die Schenkel 54 und 56 sind in etwa rechtwinklig zueinander ausgerichtet, wobei der Winkel (siehe Fig. 3) etwas kleiner als 90° sein kann. Hierdurch wird ein Rattern der unteren Kante bzw. des unteren Endes 70 und des übrigen Teils des Schenkels 56 vermieden, wenn der Befestigungsbolzen 40 angezogen ist. Ebenso wird dadurch verhindert, daß der Schenkel 56 gegen die Rückseite 20 des Trägers 22 schlägt, da der Befestigungsbolzen 40 die Halterung 52 sowie das zugehörige Eckteil nach vorne und unten zieht, wobei diese Bewegung der Halterung durch den gekrümmten Formteil 66 unterstützt wird, der durch Anziehen des Befestigungsbolzens 40 gewährleistet, daß der Schenkel 56 fast vollständig plan gegen die Rückseite 20 und der Schenkel 54 gegen die Oberseite 18 des Trägers 22 angepreßt wird.

## Patentansprüche

1. Halterung (52) zur Befestigung eines Arbeitswerkzeuges, insbesondere zur Befestigung eines Arbeitswerkzeuges eines Bodenbearbeitungsgerätes, wobei die Halterung (52) aus zwei in etwa rechteckförmig zueinander verlaufenden Schenkeln (54, 56) besteht, die gegen die Oberfläche eines aus zumindest zwei Seitenteilen gebildeten Trägers (22) zur Anlage bringbar und mit je einer Durchdringung versehen sind, wobei die eine Durchdringung zur Aufnahme eines Steges (34) des Arbeitswerkzeuges und die andere Durchdringung zur Aufnahme eines Befestigungsbolzens (40) dient, der die Halterung (52) gegen die Oberflächen des Trägers (22) drückt, dadurch gekennzeichnet, daß der eine Schenkel (54) zur Aufnahme des Befestigungsbolzens (40) mit einem Formstück bzw. Steg (58) versehen ist, der eine in Richtung des Steges (34) des Arbeitswerkzeuges zeigende Vertiefung aufweist, wobei der Steg (58) über einen zumindest teilweise gekrümmten Teil (66) an den Schenkel (54) angeschlossen ist, der gegen einen Eckteil des aus zumindest zwei Seitenteilen gebildeten Trägers (22) anlegbar ist und diesen teilweise umgibt.

2. Halterung nach Anspruch 1, dadurch gekennzeichnet, daß der als Endteil ausgebildete Steg (58) des einen Schenkels (54) eine in Richtung des Eckteiles bzw. in Richtung der Längsachse des Befestigungsbolzens (40) zeigende, in etwa V-förmige Einbuchtung bzw. Vertiefung aufweist.

3. Halterung nach den Ansprüchen 1 und 2, dadurch gekennzeichnet, daß die gegen den Träger (22) anliegende Kontaktfläche des ersten Schenkels (54) flach verläuft und das Endteil (58) in etwa die gleiche Breite wie der erste Schenkel aufweist.

4. Halterung nach einem oder mehreren der vorhergehenden Ansprüche, dadurch gekennzeichnet, daß das Endteil (58) gebogene Seitenteile (62) aufweist, die gegen das Eckteil des Trägers (22) zur Anlage bringbar sind.

5. Halterung nach einem oder mehreren der vorhergehenden Ansprüche, dadurch gekennzeichnet, daß der Träger (22) einen in etwa rechteckförmigen Querschnitt aufweist, gegen dessen oberes Eckteil das bogenförmig verlaufende Endteil anpreßbar ist.

6. Halterung nach einem oder mehreren der vorhergehenden Ansprüche, dadurch gekennzeichnet, daß der eine Schenkel (54) mit dem Endteil (58) gegen die Oberseite (18) des Trägers (22) und der Steg (34) gegen die Unterseite (30) des Trägers anliegt, während der rechteckförmig zum ersten Schenkel (54) verlaufende Schenkel (56) gegen die vertikal verlaufende Rückseite (20) des Trägers (22) anliegt und das Eckteil gegenüber der Rückseite (20) vorgesehen ist.

7. Halterung nach einem oder mehreren der vorhergehenden Ansprüche, dadurch gekennzeichnet, daß das Endteil (58) aus einem als Verlängerung des Schenkels (54) ausgebildeten Mittelstück mit zwei nach unten abgebogenen Seitenteilen (62) besteht, die allmählich in den horizontal verlaufenden Teil des Schenkels (54) übergehen und an den Eckteil des Trägers (22) angepaßt sind.

8. Halterung nach einem oder mehreren der vorhergehenden Ansprüche, dadurch gekennzeichnet, daß der Winkel zwischen den Schenkeln (54, 56) 90° oder etwas kleiner als 90° ist.

**FIG. 1**

*(PRIOR ART)*

**FIG. 2**

1/2

**FIG. 3**

**FIG. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 310 687 (ATELIERS MECANIQUES DE L'ANJOU)<br><br>* Insgesamt *<br><br>--- | 1,2,3,<br>4,5,6,<br>7,8 | A 01 B 23/02 |
| P,X | FR-A-2 507 709 (KONGSKILDE KONCERNSELSKAB A/S)<br>* Insgesamt *<br><br>--- | 1,2,4,<br>5,6,7 | |
| A | US-A-3 827 505 (SOSALLA)<br>* Figuren 1,2,3 *<br><br>--- | 2 | |
| A | BRÜNEN UND CO., "Federzinken für Kultureggen", Brochüre, DLG. München, 19-26 Mai 1968<br>* Figur; "Befestigungshalter" *<br><br>----- | 1,4,5 | |
| | | | **RECHERCHIERTE SACHGEBIETE (Int. Cl. ³)**<br><br>A 01 B<br>F 16 B |

Der vorliegende Recherchenbericht wurde für alle Patentansprüche erstellt.

| Recherchenort<br>DEN HAAG | Abschlußdatum der Recherche<br>09-02-1984 | Prüfer<br>VERDOODT S.J.M. |
|---|---|---|